**Europäisches Patentamt**

**European Patent Office**

**Office européen des brevets**

(19)

(11) **EP 1 217 790 A1**

(12) **EUROPÄISCHE PATENTANMELDUNG**

(43) Veröffentlichungstag:
26.06.2002 Patentblatt 2002/26

(51) Int Cl.⁷: **H04L 12/56**, H04L 12/403

(21) Anmeldenummer: 00811240.1

(22) Anmeldetag: 22.12.2000

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB RESEARCH LTD.**
**8050 Zürich (CH)**

(72) Erfinder:
• **Pietragalla, Luigi**
**5300 Turgi (CH)**
• **Thonet, Gilles**
**5507 Mellingen (CH)**

(74) Vertreter: **ABB Patent Attorneys**
**c/o ABB Schweiz AG**
**Brown Boveri Strasse 6**
**5400 Baden (CH)**

(54) **Verfahren zur Datenroutingaktualisierung**

(57)     Verfahren zur Datenroutingaktualisierung von Master-Slave Netzwerken welches insbesondere zur Informationsübermittlung über verrauschte oder sonstwie mit Störungen behafteten Leitungen in Stromversorgungsnetzen auf Nieder-, Mittel- oder Hochspannungsebene geeignet ist. Anhand von bekannten Angaben über den Zustand des Netzwerkes werden alle denkbaren Kommunikationspfade zu einer bestimmten Teilnehmerstation auf ihre Erfolgsaussichten geprüft, bevor eine eigentliche Messung der Übertragungsqualität erfolgt. Entsprechend ergibt sich eine minimale Belastung des Netzwerkes durch Testmeldungen. Die genannten Angaben sind in Nachbarlisten und Pfadtabellen gespeichert und werden regelmässig nachgeführt.

**Fig. 1**

**Beschreibung**

TECHNISCHES GEBIET

Die vorliegende Erfindung bezieht sich auf das Gebiet der Datenkommunikation in einem Netzwerk mit einer Masterstation, mehreren Teilnehmerstationen und einem gemeinsamen Datenkanal. Sie betrifft ein Verfahren zur Aktualisierung des Datenroutings, d.h. der Kommunikationspfade zwischen der Masterstation und einer Teilnehmerstation gemäss dem Oberbegriff des Patentanspruchs 1.

STAND DER TECHNIK

Sogenannte Master-Slave Netzwerke umfassen zumindest eine Masterstation, welche eine oder mehrere Teilnehmerstationen (slaves) überwacht. Die Masterstation übernimmt die Zugangskontrolle zum gemeinsam genutzten Datenkanal (medium access control) und trifft Entscheidungen betreffend Datenrouting. Dieses umfasst die Bestimmung derjenigen Teilnehmerstationen, welche bei der Übermittlung eines Datenpakets als Relais- oder Verstärkerstationen (repeater) zu benützen sind. Die entsprechende Information, d.h. der eigentliche Kommunikationspfad, wird den zu übertragenden Datenpaketen mitgegeben. Sämtliche Datenübertragungen erfolgen via Masterstation. Ein solches Datenkommunikationsnetzwerk wird beispielsweise realisiert, indem physikalisch auf ein Stromverteilungsnetzwerk (power grid) im Mittelspannungsbereich zurückgegriffen wird. Die Topologie eines solchen Netzwerks ist aber nicht statisch, sondern ändert mit der Zeit, indem Schalter oder Unterbrecher geöffnet oder geschlossen werden, oder infolge zeitabhängiger Signaldämpfung, verstärktem Rauschen oder sonstigen elektromagnetischen Interferenzen. Das Auffinden des optimalen Kommunikationspfades für jede Teilnehmerstation, d.h. die Aktualisierung des Datenroutings, ist im Allgemeinen eine nichttriviale Aufgabe.

Aus der EP-A 0 388 672 ist ein Verfahren zur Übermittlung von Datenpaketen oder Telegrammen in einem zentral gesteuerten Netzwerk mit einer Masterstation, mindestens einer Teilnehmerstation und einem gemeinsamen Datenkanal bekannt. Jede Teilnehmerstation hört den Datenverkehr ab, bestimmt die Übertragungsqualitäten und teilt sie der Masterstation mit. Alternativ dazu überwacht die Masterstation die Übertragungsqualität zu jeder Teilnehmerstation und ermittelt daraus gegebenenfalls auf eine nicht näher spezifizierte Art und Weise ein neues Datenrouting. Neue Teilnehmerstationen werden durch einen Spezialaufruf der Masterstation ins Netzwerk genommen.

DARSTELLUNG DER ERFINDUNG

Aufgabe der vorliegenden Erfindung ist es, bei einem zentral gesteuerten Netzwerk zur Datenübertragung ein Verfahren zur Datenroutingaktualisierung anzugeben, welches den regulären Datenverkehr möglichst wenig durch zusätzliche Abfragen oder Testmeldungen behindert. Diese Aufgabe wird durch ein Verfahren zur Datenroutingaktualisierung mit den Merkmalen des Patentanspruchs 1, ein Datenübertragungsverfahren mit den Merkmalen des Patentanspruchs 10 und ein Computerprogrammprodukt mit den Merkmalen des Patentanspruchs 11 gelöst.

Kern der Erfindung ist es, bei der im Rahmen einer Aktualisierung des Datenroutings vorgesehenen Ermittlung eines neuen Kommunikationspfades zwischen der Masterstation und einer Teilnehmerstation mittels bekannter Angaben über den momentanen Zustand des Netzwerkes die erfolgversprechendsten Kandidaten vorzuselektieren. Anschliessend wird die Übertragungsqualität durch Aussenden einer Testmeldung nur für diese selektierten Kommunikationspfade und nicht für alle denkbaren Kommunikationspfade gemessen. Dadurch wird das Netzwerk nur minimal durch zusätzliche Abfragen belastet.

Die Vorselektion prüft anhand von gewissen Kriterien, ob die Messung der Übertragungsqualität eines Kandidaten gerechtfertigt ist. So sollte vorzugsweise jede der vorgesehenen Wiederholstationen des zu prüfenden Kommunikationspfades auch tatsächlich mit der nächstfolgenden Wiederholstation eine direkte Verbindung haben. Zudem sollte der Abschnitt des zu prüfenden Pfades, welcher von der Masterstation zur letzten, der Zielstation unmittelbar vorangehenden Wiederholstation führt, mit dem aktuellen, d.h. zur Zeit besten Kommunikationspfad zu dieser letzten Wiederholstation identisch sein.

Sobald ein neuer Kommunikationspfad mit einer gegenüber dem aktuellen Kommunikationspfad verbesserten Übertragungsqualität ermittelt worden ist, wird der Letztgenannte durch den Erstgenannten ersetzt. Vorzugsweise wird die Suche aber nicht bereits nach dem Auffinden eines erstbesten Ersatz-Kommunikationspfades abgebrochen, sondern noch weiter fortgesetzt, bis alle denkbaren Kandidaten geprüft sind.

Vorzugsweise wird die Menge aller denkbaren Kommunikationspfade iterativ nach erfolgversprechenden Kandidaten geprüft. Die Vorselektion beginnt mit dem direkten Kommunikationspfad ohne Wiederholstation, fährt fort mit Kommunikationspfaden mit einer immer grösseren Zahl an Wiederholstationen und endet mit Kommunikationspfaden mit einer festgelegten Maximalzahl an Wiederholstationen.

Weitere vorteilhafte Ausführungsformen gehen aus den abhängigen Patentansprüchen hervor.

KURZE BESCHREIBUNG DER FIGUREN

Nachfolgend wird die Erfindung anhand von Ausführungsbeispielen im Zusammenhang mit den Zeichnungen näher erläutert. Es zeigen

Fig.1 ein Netzwerk mit einer Masterstation M und mehreren Teilnehmerstationen S1-S4,

Fig.2 eine mögliche logische Verbindungsstruktur zusammen mit den zugehörigen Nachbarlisten für das Netzwerk aus Fig.1, und

Fig.3 die zu einem bestimmten Zeitpunkt aktuellen Pfade.

Die in den Zeichnungen verwendeten Bezugszeichen sind in der Bezugszeichenliste zusammengefasst. Grundsätzlich sind gleiche Teile mit denselben Bezugszeichen versehen.

WEGE ZUR AUSFÜHRUNG DER ERFINDUNG

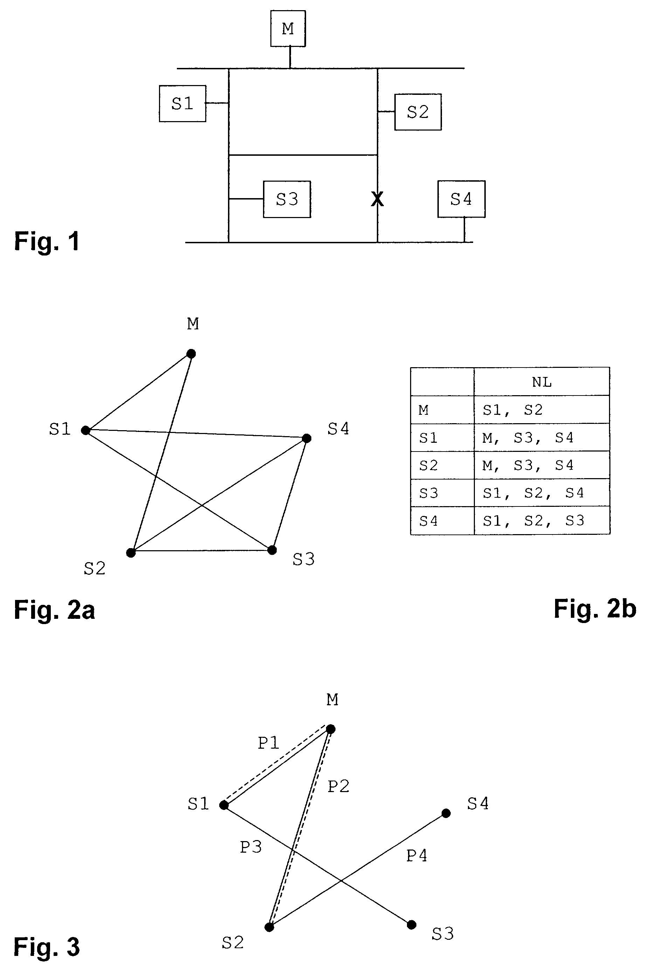

In Fig. 1 ist ein Netzwerk mit einer Masterstation M und mehreren Teilnehmerstationen S1-S4 (Slaves), welche durch einen gemeinsamen Datenkanal verbunden sind, dargestellt. Die Masterstation M kontrolliert den Datenaustausch im Netzwerk, sie gibt Befehle aus und fordert Daten an.

Fig.2a zeigt ein Beispiel einer logischen Verbindungsstruktur für das Netzwerk aus Fig.1. Jede eingezeichnete Linie stellt eine aktuelle direkte Verbindung zwischen zwei Stationen dar. In Fig.2b sind die zugehörigen sogenannten Nachbarlisten NL (Neighbouring List) aufgeführt. Diese umfassen für jede Station deren Nachbarstationen, d.h. diejenigen Stationen, mit welchen zur Zeit eine direkte Verbindung ohne zwischengeschaltete Wiederholstationen möglich ist. Diese Nachbarlisten NL sind nicht notwendigerweise symmetrisch, eine direkte Verbindung zwischen zwei Stationen kann auch nur in einer Richtung möglich sein. Die Nachbarstationen in den Nachbarlisten NL sind in diesem Falle zumindest hörbar, d.h. von ihnen können Signale empfangen werden. Allgemein enthalten die Nachbarlisten NL keine weitergehenden Angaben zur Qualität der Verbindung. Sie werden durch Beobachten des regulären Datenverkehrs kontinuierlich aufdatiert und sind alle der Masterstation M bekannt.

In Fig.3 sind beispielhaft die zu einem bestimmten Zeitpunkt aktuellen Kommunikationspfade P1-P4 (routing Paths) von der Masterstation M zu den Teilnehmerstationen S1-S4 des Netzwerkes aus Fig.1 eingezeichnet. Die beiden mit einer durchgezogenen Linie dargestellten Pfade P3 und P4 führen je über eine Wiederholstation S1 beziehungsweise S2.

In einer bei der Masterstation M gespeicherten Pfadtabelle PT (routing Path Table) sind die aktuellen Kommunikationspfade P1-P4 eingetragen. Die zu dem Beispiel aus Fig.3 gehörige Pfadtabelle PT ist weiter unten aufgeführt. Die aktuellen Pfade P1-P4 sind die zurzeit bekannten besten Pfade. Für jeden aktuellen Pfad P1-P4 sind auch die Übertragungskosten CM1-CM4 (Cost Measure), welche im Wesentlichen umgekehrt proportional zur Übertragungsqualität sind, bekannt. Zusätzlich können in der Pfadtabelle PT ältere, nicht-aktuelle Pfade P' gespeichert sein, welche beispielsweise zu einem früheren Zeitpunkt einmal als beste Pfade geführt wurden.

Die Übertragungskosten CM werden durch den Master M überwacht und in regelmässigen Abständen aufdatiert, und zwar gemäss einer auf die Eigenschaften des Datenkanals abgestimmten Art. Generell umfasst jede derartige Messung einer Verbindungsqualität das Aussenden einer Meldung durch den Master M und das Abwarten einer Antwort der entsprechenden Zielstation S. Alle Meldungen umfassen das in ihrem Kopf (header) eincodierte Datenrouting, d.h. den vorgesehenen Kommunikationspfad P. Die dabei als Wiederholstationen vorgesehenen Teilnehmerstationen repetieren die Meldung in der durch den Kommunikationspfad P festgelegten Reihenfolge jeweils mindestens einmal, bis die Meldung schliesslich bei der Zielstation S angelangt ist. Die Antwort erfolgt in umgekehrter Reihenfolge der Wiederholstationen. Basiert die genannte Messung auf speziellen Testmeldungen (ping) und nicht auf regulärem Datenverkehr zur Zielstation S, so wird dadurch der Datenkanal belastet, insbesondere falls zu statistischen Zwecken mehrere Testmeldungen versandt werden müssen.

Als geeignete Grösse zur Bestimmung der Übertragungsqualität wird in der eingangs genannten Schrift die mittlere Anzahl störungsbedingter Wiederholungen eines Datenpakets vorgeschlagen.

Eine weitere, aus dem Stand der Technik bekannte Methode basiert auf einer Schätzung der Übertragungsfehlerwahrscheinlichkeit $P_E$. Diese wird ermittelt, indem eine ausreichende Anzahl Testmeldungen ausgesandt und von der Zielstation S retourniert wird und daraus eine Erfolgsrate respektive eine Fehlerwahrscheinlichkeit $P_E$ bestimmt wird. Die Übertragungskosten CM werden dann definiert als der Kehrwert der Kanalbenützung:

$$CM = \left\{ \frac{P_E}{1-P_E}(L_F + CT_{OUT}) + (NoR + 1)(L_F + L_A + 2CT_S) \right\} / L_D$$

Dabei ist weiter C die als bekannt angenommene Kanalkapazität [bit/s], NoR die Anzahl Wiederholstationen, $L_F$ die Länge eines Frames [bit], $L_A$ die Länge eines Acknowledgement Frames [bit], $L_D$ die Anzahl Datenbits pro Frame [bit], $T_S$ die Prozesszeit pro Wiederholstation [s], und $T_{OUT}$ die Totzeit, welche der Master verstreichen lässt, bevor er einen fehlerhaft übermittelten Frame nochmals sendet.

Eine andere Methode basiert auf der gleichzeitigen Messung zweier Grössen, nämlich der Anzahl übertragener Bits N, und der Laufzeit T (round trip time delay) [s]. Die zum Zeitpunkt $T_1$ vom Master M ausgesandte Meldung der Bitlänge $N_1$ wird nach Empfang durch die Zielstation S bestätigt, indem diese eine zweite Meldung der Bitlänge $N_2$ an den Master M zurücksendet.

N entspricht dann der Summe $N_1 + N_2$, und die Laufzeit T der Zeitdifferenz zwischen Ankunft der Antwort und dem Zeitpunkt der Aussendung $T_1$. Die momentane Kanalkapazität C [bit/s] enspricht dem Verhältnis dieser zwei Werte, d.h. C = N/T.

Die Übertragungskosten CM sind definiert als der Kehrwert der Summe der zuletzt gemessenen NoP (Number Of Pings) Kanalkapazitäten $C_i$:

$$CM = 1 / \sum_{i=1}^{NoP} C_i \ .$$

Die vorgeschlagene Mittelwertbildung verringert den Einfluss von transienten Ausreissern mit kurzzeitig besonders schlechten Qualitäten. Falls keine weitere Normierung vorgenommen wird, ist die Anzahl der Messungen NoP fest und liegt typischerweise zwischen 5 und 10. Im regulären Datenverkehr werden die übermittelten Meldungen zur Bestimmung der momentanen Kanalkapazitäten $C_i$ ausgewertet. Sollte einmal während längerer Zeit kein Datenaustausch mit dem Teilnehmer S erfolgen, können auch spezielle Testmeldungen beispielsweise im Minutentakt abgeschickt werden.

Die Vorteile dieser zweiten Methode liegen darin, dass wo immer möglich die momentanen Kanalkapazitäten $C_i$ aus dem regulären Datenverkehr gewonnen werden und somit realistische Werte darstellen. Falls eine Wiederholstation eine Meldung mehrfach repetieren muss, äussert sich dies in einer längeren Laufzeit T, braucht aber beim Master nicht als Spezialfall behandelt zu werden.

Sobald nun festgestellt wird, dass infolge wechselnder Übertragungsbedingungen ein aktueller, in der Pfadtabelle PT verzeichneter Kommunikationspfad P zu einer bestimmten Teilnehmer- oder Zielstation S nicht mehr eine genügende Übertragungsqualität aufweist, d.h. dass die entsprechenden Übertragungskosten CM(P) über einen kritischen Grenzwert angestiegen sind, wird die Suche nach einem alternativen Kommunikationspfad eingeleitet. Der erfindungsgemässe adaptive Algorithmus erlaubt eine Anpassung an die geänderten Bedingungen, welche mit einem Minimum an Datenkanalbelastung auskommt. Dabei werden a priori alle denkbaren Pfade, d.h. alle denkbaren Kombinationen von Wiederholstationen, als Testpfade TP in Betracht gezogen. Praktisch wird man sich aber auf eine vernünftige, der Ausdehnung des Netzwerks angepasste maximale Anzahl Wiederholstationen beschränken. Entsprechend bilden alle zu prüfenden Testpfade eine endliche Pfadmenge PS (Path Set). Erfindungsgemäss wird nun die Übertragungsqualität nicht von allen Testpfaden TP gemessen, sondern nur von den Erfolgversprechendsten. Die Kriterien, nach welchen die Testpfade TP zu diesem Zweck vorselektioniert werden, lassen sich wie folgt zusammenfassen:

Die Übertragungskosten CM(TP) eines Testpfades TP, welcher von der Masterstation M über die Wiederholstationen $S_1$, $S_2$, ..., $S_{n-1}$, $S_n$ zur Zielstation S führt, wird dann und nur dann gemessen, falls eine festgelegte Kombination der folgenden Kriterien A, B und C erfüllt ist:

A

- $S_1$ gehört zur Nachbarliste von Master M und Teilnehmer $S_2$
- $S_i$ gehört zur Nachbarliste der Teilnehmer $S_{i-1}$ und $S_{i+1}$, i=2...n-1
- $S_n$ gehört zur Nachbarliste von Teilnehmer $S_{n-1}$ und Zielstation S.

B der über $S_1$, $S_2$, ..., $S_{n-1}$ zu $S_n$ führende Abschnitt des Testpfades entspricht dem derzeit aktuellen, in der Pfadtabelle PT gespeicherten Kommunikationspfad $P_n$ zur Teilnehmerstation $S_n$;

C der aktuelle Pfad $P_n$ zur Teilnehmerstation $S_n$ muss eine bestimmte Qualität aufweisen, d.h. $CM(P_n) < k \cdot CM(P)$, wobei k eine vordefinierte Konstante kleiner als eins ist.

Kriterium C gibt die Tatsache wieder, dass die Inbetriebnahme einer zusätzlichen Wiederholstation immer auch eine zusätzliche Verzögerung der Meldungen bedeutet und sich deshalb nicht nur positiv auf die Übertragungsqualität auswirkt. Das dritte Kriterium C ist als optional anzusehen, da insbesondere die Bestimmung der Konstanten k eine Erfahrungssache ist. Die genannte Kombination der Kriterien kann auch nur ein einziges Kriterium umfassen. Selbstverständlich ist es auch möglich, obigen drei Kriterien noch Weitere hinzuzufügen.

Anhand eines Beispiels soll nun aufgezeigt werden, wie im Falle eines zu aktualisierenden Routings vorgegangen wird. Die als symmetrisch angenommenen Nachbarlisten entsprechend Fig.2b sehen wie folgt aus:

| Station | Nachbarliste NL |
|---------|-----------------|
| M | S1, S2 |
| S1 | M, S3, S4 |
| S2 | M, S3, S4 |
| S3 | S1, S2, S4 |
| S4 | S1, S2, S3 |

Die der Fig.3 entsprechende Pfadtabelle PT nimmt folgende Gestalt an:

| Teilnehmer | Pfad | Qualität | Wiederholstationen |
|------------|------|----------|--------------------|
| S1 | P1 | CM1 | Keine (direkt) |
| S2 | P2 | CM2 | Keine (direkt) |
| S3 | P3 | CM3 | S1 |
| S4 | P4 | CM4 | S2 |

Zu einem bestimmten Zeitpunkt nimmt nun die Qualität der Verbindung P4 zur Teilnehmerstation S4 sprunghaft ab, beispielsweise indem an der Stelle X in Fig.1 ein Schalter des Netzwerkes geöffnet wird. Die Übertragungskosten CM4 nehmen dabei zu und dies wird von der Masterstation festgestellt, worauf ein Evaluationsprozess eingeleitet wird. Die Nachbarlisten bleiben dabei aber vorerst unverändert, da die Stelle X beziehungsweise der betroffene Teil des Netzwerkes zumindest vorderhand nicht bekannt ist.

Im Folgenden werden Testpfade mit maximal zwei Wiederholstationen geprüft, die Pfadmenge PS4 umfasst somit zehn Testpfade. Alle denkbaren Testpfade werden in einer bestimmten Reihenfolge ausgewählt und geprüft. Im vorliegenden Beispiel wird naheliegenderweise wie folgt vorgegangen:

a) direkte Kommunikationspfade ohne Wiederholstation,
b) Kommunikationspfade mit einer Wiederholstation,
c) Kommunikationspfade mit zwei Wiederholstationen, wobei deren Reihenfolge nicht kommutativ ist und somit der Testpfad über S1,S2 verschieden ist von demjenigen über S2,S1.

Zuerst wird also nachgeprüft, ob der direkte Testpfad TP1 ohne Wiederholstationen die aus der Vereinigung aller drei genannten Kriterien A, B und C gebildete Kriterien-Kombination erfüllt. Bereits das erste Einzelkriterium A ist jedoch nicht erfüllt (S4 ist nicht in der Nachbarliste von M), womit sich eine weitergehende Prüfung erübrigt und TP1 als Kandidat ausscheidet.

Als nächstes sind die Testpfade mit *einer* Wiederholstation an der Reihe. TP2 führt über Teilnehmer S1 als Wiederholstation. Kriterium A ist erfüllt (S1 ist in der Nachbarliste sowohl von M wie von S4), Kriterium B auch (die direkte Verbindung M - S1 ist gemäss Pfadtabelle der aktuelle Pfad). Kriterium C läuft darauf hinaus, ob CM1 kleiner als k mal CM4 ist. Angenommen dies ist der Fall, so werden die Übertragungskosten CM(TP2) des Testpfades TP2 gemessen. Liegen diese tiefer als diejenigen CM4 des bisherigen aktuellen Kommunikationspfades P4, wird der Letztere in der PT ersetzt, TP2 wird also zum neuen aktuellen Pfad für den Teilnehmer S4 ernannt

Vorzugsweise geht die Suche nach dem besten Pfad zu Teilnehmer S4 noch weiter. Als nächstes wird als Testpfad TP3 der inzwischen nicht mehr aktuelle Pfad über S2 betrachtet. Kriterium A ist erfüllt (S2 wird möglicherweise noch in den Nachbarlisten von M und S4 geführt), ebenso Kriterium B. Kriterium C könnte durchaus auch erfüllt sein (d.h. CM2 < k · CM(TP2)), so dass es auch hier zu einer Messung der Übertragungskosten CM(TP3) kommt.

Der letzte denkbare Testpfad über S3 scheitert bereits am Kriterium A, da M nicht in der Nachbarliste von S3 ist.

Von den über zwei Wiederholstationen führenden Pfaden ist zuerst derjenige über S1 und S2 beziehungsweise umgekehrt zu untersuchen und auch sofort zu verwerfen, da S1 und S2 nicht in den gegenseitigen Nachbarlisten zu finden sind. Ebenso erfüllt kein über S3 als erster Wiederholstation führender Pfad das erste Kriterium A.

Es verbleiben also nur die Pfade über S1,S3 und S2,S3. Von diesen zwei Pfaden ist nur der Erstgenannte der aktuelle Pfad zu S3 (siehe PT) und somit mit dem Kriterium B vereinbar. Erfüllt dieser Pfad auch das Kriterium C, werden seine Übertragungskosten gemessen und wird gegebenenfalls der zur Zeit aktuelle Pfad TP2 bereits wieder ersetzt.

Von den insgesamt zehn denkbaren Testpfaden sind also nur deren drei tatsächlich gemessen worden, und dies erst noch sozusagen unter Ausschluss des Kriteriums C. Der bisherige aktuelle Pfad P4 bleibt als älterer Pfad P4' aber weiterhin gespeichert. Somit kann bei der nächsten Evaluation, d.h. falls der neue aktuelle Pfad TP2 nicht mehr genügt, kurzfristig auf den alten aktuellen Pfad P4' zurückgegriffen werden. Selbstverständlich ist es denkbar, dass auch ohne steigende Übertragungskosten eines aktuellen Pfades der alte aktuelle Pfad, der direkte Pfad oder ein anderweitig bevorzugter Pfad geprüft werden, sollte der Verdacht bestehen, dass einer der Letztgenannten mittlerweile eine bessere Übertragungsqualität aufweist.

Das genannte Verfahren ist besonders geeignet zur Informationsübermittlung über verrauschte oder sonstwie mit zeit-, orts- und/oder frequenzabhängigen Störungen behafteten Leitungen in Stromversorgungsnetzen auf Nieder-, Mittel- oder Hochspannungsebene. Die Distanz zwischen den Teilnehmern beträgt dann typischerweise zwischen 100 m und 10 km. Es ergibt sich eine verbesserte Verfügbarkeit der einzelnen Verbindungen, d.h. ein zuverlässiger und effizienter Datenaustausch bei gleichzeitiger minimaler Belastung des Netzwerkes durch Testmeldungen.

BEZUGSZEICHENLISTE

M      Masterstation

S      Teilnehmerstation (Slave), Wiederholstation (repeater)

NL      Nachbarliste (Neighbouring List)

P      Kommunikationspfad (routing Path)

PT      Kommunikationspfadtabelle (routing Path Table)

CM      Übertragungskosten (Cost Measure)

PS      Pfadmenge (Path Set)

TP      Testpfad

**Patentansprüche**

1. Verfahren zur Datenroutingaktualisierung in einem Netzwerk mit einer Masterstation (M) und mehreren Teilnehmerstationen (S1-S4), wobei

    a) für die Masterstation (M) und jede Teilnehmerstation (S1-S4) eine Nachbarliste (NL) mit den jeweiligen Nachbarstationen geführt wird,

    b) aktuelle Kommunikationspfade (P1-P4) von der Masterstation (M) zu den Teilnehmerstationen (S1-S4) in einer Kommunikationspfadtabelle (PT) gespeichert werden,

    c) Übertragungskosten (CM1-CM4) der aktuellen Kommunikationspfade (P1-P4) gemessen werden,

    d) in der Kommunikationspfadtabelle (PT) ein aktueller Kommunikationspfad (P4) zu einer Teilnehmerstation (S4) mit einer ungenügenden Übertragungsqualität (CM4) durch einen alternativen Kommunikationspfad ersetzt wird,

**dadurch gekennzeichnet, dass**

e) aus einer begrenzten Menge (PS4) von Kommunikationspfaden zwischen der Masterstation (M) und besagter Teilnehmerstation (S4) ein erster Testpfad (TP1) ausgewählt wird,

f) der Testpfad (TP1) mindestens einem Kriterium (A,B,C) unterzogen wird, welches aus den Nachbarlisten (NL), der Kommunikationspfadtabelle (PT) und den Übertragungskosten (CM1-CM4) hergeleitet wird,

g) falls das mindestens eine Kriterium (A,B,C) erfüllt ist, die Übertragungskosten (CM(TP1)) des Testpfades (TP1) gemessen werden und

h) falls die Übertragungskosten (CM(TP1)) des Testpfades (TP1) geringer sind als diejenigen des aktuellen Kommunikationspfades (P4), Letzterer in der Pfadtabelle (PT) durch den Testpfad (TP1) ersetzt wird, wobei,

i) falls der Testpfad (TP1) das mindestens eine Kriterium (A,B,C) oder mindestens ein Kriterium (A,B,C) nicht erfüllt oder die gemessenen Übertragungskosten (CM(TP1)) höher sind als diejenigen des aktuellen Kommunikationspfades (P4), ein zweiter Testpfad (TP2) ausgewählt und gemäss Punkt f) weiterverfahren wird.

2. Verfahren nach Anspruch 1, **dadurch gekennzeichnet, dass** alle Testpfade aus der besagten Kommunikationspfadmenge (PS4) ausgewählt und dem mindestens einen Kriterium (A,B,C) unterzogen werden, und dass der aktuelle Kommunikationspfad (P4) durch den Testpfad (TP) mit den geringsten gemessenen Übertragungskosten (CM(TP)) ersetzt wird.

3. Verfahren nach Anspruch 2, **dadurch gekennzeichnet, dass** die Auswahl der Testpfade aus der Kommunikationspfadmenge (PS4) bei einem direkten Kommunikationspfad beginnt, bei Kommunikationspfaden mit einer zunehmenden Anzahl Wiederholstationen fortfährt und bei Kommunikationspfaden mit einer maximalen Anzahl Wiederholstationen endet.

4. Verfahren nach Anspruch 1, **dadurch gekennzeichnet, dass** für einen Testpfad von der Masterstation (M) zu der besagten Teilnehmerstation (S4) als Zielstation ein erstes Kriterium (A) erfüllt ist, falls die Masterstation (M), die Zielstation (S4) und alle in einer bestimmten Reihenfolge vorgesehenen Wiederholstationen (S2,S3) in der Nachbarliste (NL) der jeweils vorangehenden und nachfolgenden Station (M,S2,S3; S2,S3,S4) liegen.

5. Verfahren nach Anspruch 4, **dadurch gekennzeichnet, dass** ein zweites Kriterium (B) erfüllt ist, falls ein Testpfadabschnitt von der Masterstation (M) über alle vorgesehenen Wiederholstationen (S2,S3) identisch ist mit dem aktuellen Kommunikationspfad (P3) von der Masterstation (M) zur letzten Wiederholstation (S3).

6. Verfahren nach Anspruch 5, **dadurch gekennzeichnet, dass** ein drittes Kriterium (C) erfüllt ist, falls die Übertragungskosten (CM(P3)) des genannten Testpfadabschnittes weniger als das k-fache der Übertragungskosten (CM4) des aktuellen Kommunikationspfades (P4) zur Zielstation (S4) betragen, wobei k eine Zahl kleiner als 1 ist.

7. Verfahren nach einem der vorangehenden Ansprüche, **dadurch gekennzeichnet, dass** die Nachbarlisten (NL) durch die Teilnehmerstationen aufgrund des mitgehörten Datenverkehrs nachgeführt werden und nach jeder Änderung an die Masterstation (M) übermittelt werden.

8. Verfahren nach einem der vorangehenden Ansprüche, **dadurch gekennzeichnet, dass** die Übertragungskosten (CM) durch die Masterstation (M) aufgrund des regulären Datenverkehrs oder durch Aussenden einer Testmeldung nachgeführt werden.

9. Verfahren nach einem der vorangehenden Ansprüche, **dadurch gekennzeichnet, dass** die Messung der Übertragungskosten (CM) die Bestimmung einer momentanen Kanalkapazität ($C_i$) als Verhältnis einer Anzahl übertragener Bits (N) und der dazu benötigten Zeit (T) umfasst.

10. Datenübertragungsverfahren, bei welchem Datenpackete von einer Masterstation (M) an eine Teilnehmerstation (S) versandt werden gemäss einer bei der Masterstation (M) gespeicherten Kommunikationspfadtabelle (PT), welche nach einem der vorhergehenden Ansprüche aktualisiert wird.

11. Computerprogrammprodukt mit einem Computerprogramm, das in einen Speicher eines Computers ladbar ist und bei einer Ausführung auf diesem Computer das Verfahren gemäss Anspruch 10 ausführt.

**Fig. 1**

**Fig. 2a**

| | NL |
|---|---|
| M | S1, S2 |
| S1 | M, S3, S4 |
| S2 | M, S3, S4 |
| S3 | S1, S2, S4 |
| S4 | S1, S2, S3 |

**Fig. 2b**

**Fig. 3**

**Europäisches Patentamt**

# EUROPÄISCHER RECHERCHENBERICHT

Nummer der Anmeldung

EP 00 81 1240

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 568 477 A (IBM)<br>3. November 1993 (1993-11-03)<br>* Seite 5, Zeile 23 - Zeile 27;<br>Abbildungen 1,4,5 *<br>--- | 1-11 | H04L12/56<br>H04L12/403 |
| A | ANDREW S. TANENBAUM: "Computer Networks"<br>1996 , PRENTICE HALL , UPPER SADDLE RIVER,<br>NEW JERSEY 074 58 XP002169330<br>ISBN: 0-13-349945-6<br>* Seite 347, Zeile 17 - Zeile 23 *<br>* Seite 359, Zeile 10 - Seite 367, Zeile 10 *<br>----- | 1,10,11 | |
| | | | **RECHERCHIERTE SACHGEBIETE (Int.Cl.7)**<br><br>H04L |

Der vorliegende Recherchenbericht wurde für alle Patentansprüche erstellt

| Recherchenort | Abschlußdatum der Recherche | Prüfer |
|---|---|---|
| BERLIN | 15. Juni 2001 | Siebel, C |

**ANHANG ZUM EUROPÄISCHEN RECHERCHENBERICHT**
**ÜBER DIE EUROPÄISCHE PATENTANMELDUNG NR.**                 EP 00 81 1240

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2001

| Im Recherchenbericht angeführtes Patentdokument | Datum der Veröffentlichung | Mitglied(er) der Patentfamilie | Datum der Veröffentlichung |
|---|---|---|---|
| EP 0568477 A | 03-11-1993 | US 5233604 A | 03-08-1993 |
| | | CA 2089789 A,C | 29-10-1993 |
| | | DE 69328647 D | 21-06-2000 |
| | | DE 69328647 T | 11-01-2001 |
| | | JP 2793467 B | 03-09-1998 |
| | | JP 6097964 A | 08-04-1994 |

EPO FORM P0461

Für nähere Einzelheiten zu diesem Anhang : siehe Amtsblatt des Europäischen Patentamts, Nr.12/82